# EUROPEAN PATENT SPECIFICATION

(11) **EP 2 693 540 B1**
(45) Date of publication and mention of the grant of the patent: **10.05.2017**
(21) Application number: 12764669.3
(22) Date of filing: 28.03.2012
(51) Int. Cl.: H01M 4/587, C01B 32/20, C01B 32/05, H01M 10/0525

(54) **PRODUCTION METHOD OF COKING COAL COMPOSITION OF CARBON MATERIAL FOR NEGATIVE ELECTRODE OF LITHIUM ION SECONDARY BATTERY**
HERSTELLUNGSVERFAHREN FÜR EINE KOKSKOHLEZUSAMMENSETZUNG AUS EINEM KOHLENSTOFFMATERIAL FÜR DIE NEGATIVELEKTRODE EINER LITHIUMIONENSEKUNDÄRBATTERIE
PROCÉDÉ DE PRODUCTION D'UNE COMPOSITION DE CHARBON À COKE DE MATÉRIAU DE CARBONE POUR ÉLECTRODE NÉGATIVE DE BATTERIE SECONDAIRE AU LITHIUM-ION

(30) Priority: 30.03.2011 JP 2011075110
(43) Date of publication of application: 05.02.2014
(73) Proprietor: JX Nippon Oil & Energy Corporation, Chiyoda-ku Tokyo 100-8162 (JP)
(72) Inventor: TANO, Tamotsu, Tokyo 100-8162 (JP); OZAWA, Hiroshi, Tokyo 100-8162 (JP); HIGASHI, Keiji, Tokyo 100-8162 (JP); OYAMA, Takashi, Tokyo 100-8162 (JP); NISHIDA, Masatoshi, Tokyo 100-8162 (JP)
(74) Representative: Müller-Boré & Partner Patentanwälte PartG mbB
(86) International application number: PCT/JP2012/058098
(87) International publication number: WO 2012/133510

(56) References cited:
- EP-A1- 2 192 641
- EP-A1- 2 219 252
- WO-A1-2010/074247
- WO-A1-2011/034152
- JP-A- 10 326 611
- JP-A- 2009 076 209
- US-A- 4 661 241
- John Graham Clark: "THE MODIFICATION OF WAXY OIL FOR PREPARING A POTENTIAL FEEDSTOCK FOR NEEDLE COKE PRODUCTION - Chapters 1-2", , 1 July 2011 (2011-07-01), pages 1-1, XP055136731, Retrieved from the Internet: URL:http://upetd.up.ac.za/thesis/available /etd-02012012-201133/unrestricted/01chapte rs1-2.pdf [retrieved on 2014-08-27]
- Anonymous: "What Makes Heavy Oil "Heavy?" - Halliburton", , 1 January 2014 (2014-01-01), XP055137009, Retrieved from the Internet: URL:http://www.halliburton.com/en-US/ps/so lutions/heavy-oil/what-makes-heavy-oil-hea vy.page?node-id=hhiyctma [retrieved on 2014-08-28]

## Description

### Technical Field

The present invention relates to a production method for raw coke materials of a carbon material for a negative electrode of a lithium ion secondary battery.

### Background Art

Lithium ion secondary batteries are light in weight and have excellent input and output characteristics compared with conventional secondary batteries such as nickel-cadmium batteries, nickel metal hydride batteries, and lead batteries, and so they have been considered promising in recent years as power sources for hybrid vehicles and electric vehicles. Particularly, in recent years, there is an increasing demand for hybrid vehicles and the fuel consumption in the traffic congestion regions in the city is reduced to one half or less. Therefore, the hybrid vehicles have been attracting attention in order to solve energy and environmental problems. The batteries for hybrid vehicles are discharged at startup or acceleration and used to charge the regeneration energy when putting on the brake (energy provided by regenerative charging).

At startup or acceleration or deceleration, the energy is discharged or charged rapidly (high speed). Thus, as the batteries for hybrid vehicles, lithium ion secondary batteries having excellent high-speed charge and discharge characteristics are desired.

On the other hand, since the electric vehicles use only the electric power of the secondary battery as a power source, it is required for the batteries for electric vehicles to have high energy density for storing a large amount of electric energy. In this regard, the hybrid vehicles are not configured to use only the electric power of the secondary battery as a power source. Consequently, the batteries for hybrid vehicles do not need to have a high energy density which is required for batteries for electric vehicles.

A carbon material is used as an active material forming the electrodes of the lithium ion secondary battery. In order to improve the performance of the lithium ion secondary battery, the carbon material has been variously studied (for example, Patent Literatures 1 and 2). In general, conventional carbon materials used as negative electrode materials in lithium ion secondary batteries are roughly classified into graphite-based ones and amorphous ones. Graphite-based carbon materials have an advantage of high energy density per unit volume compared to amorphous carbon materials. In view of this, graphite-based carbon materials are widely used as negative electrode materials in lithium ion secondary batteries for mobile phones and laptop computers that are compact but require large charge and discharge capacities. Graphite has a structure in which hexagonal network planes of carbon atoms have been stacked regularly one after another and during charging and discharging, intercalation and deintercalation of lithium ions takes place at the edges of the hexagonal network planes.

### Citation List

### Patent Literature

Patent Literature 1: Japanese Patent No. 3056519
Patent Literature 2: Japanese Patent Application Publication No. 4-24831
Patent Literature 3: Japanese Patent Application Laid-Open No. 2006-179697

US 4 661 241 discloses methods for producing coke materials using delayed coking of heavy oils.

### Non Patent Literature

Non Patent Literature 1: Carbon, Vol. 26, No. 1, p. 49-55, 1988

### Summary of the Invention

### Technical Problem

The use of a conventional graphite-based carbon material as a negative electrode material of a lithium ion secondary battery allows the energy density per unit volume to be high as described above. However, there is room for improvement, particularly in terms of high-speed discharge characteristics. This is mainly considered due to the fact that the graphite-based carbon material has high crystallinity, and thus when it is used for a negative electrode of a lithium ion secondary battery, diffusion of lithium ions in a carbon layer is restricted.

As a raw coke materials for the graphite-based carbon material, petroleum raw coke (hereinafter referred to as "raw coke") is variously studied (for example, Non Patent Literatures 1 and 3). However, the property of the raw coke as the raw coke materials largely varies depending on the use. Conventional raw coke has been not sufficient, particularly as the carbon material for a negative electrode of a lithium ion secondary battery which is necessary for high-speed charge and discharge characteristics.

As the carbon material for a negative electrode of a lithium ion secondary battery proposed conventionally, graphite materials such as natural graphite, synthetic graphite and expanded graphite; a carbon material such as mesocarbon microbeads, mesophase pitch-based carbon fiber, vapor grown carbon fiber, pyrolytic carbon, petroleum coke, pitch coke and needle coke which have been subjected to carbonization; synthetic graphite materials produced by graphitization of these carbon materials; or a mixture thereof have been proposed. Even when these materials have been used, it has been difficult to reproducibly exhibit high-speed charge and discharge characteristics.

Conventionally, the crystallinity of a carbon material has been specified by the crystalline specification based on an X-ray diffraction. However, it is not necessarily said the crystalline specification shows the characteristics of the whole bulk of the raw coke materials. This will be understood from the description in "Handbook: carbon family" (editor: Michio Inagaki, Agne Shofu Publishing Inc.), "When selective orientation of crystallites is found (selective orientation is found in almost all carbon materials), X-ray diffraction may provide information on limited crystallites". Probably for this reason, in the case of the conventional raw coke, it has been impossible to reproducibly exhibit, particularly high-speed charge and discharge characteristics.

The present invention has been made in view of the actual conditions and its object is to provide, particularly, a production method for a carbon material for a lithium ion secondary battery reproducibly exhibiting high-speed charge and discharge characteristics which are required for batteries for hybrid vehicles.

### Solution to Problem

The present inventors have focused on and studied the production mechanism of raw coke materials for a carbon material including excellent uniaxial orientation (crystallinity) to ensure an appropriate energy density and having a specific structure advantageous for diffusion of lithium. For example, one kind of raw coke materials, needle coke is produced in such a manner that when a heavy oil is treated at high temperatures, thermal decomposition and polycondensation reactions will occur, liquid crystal spherules referred to as "mesophase" are formed, and the spherules coalesced to form a large liquid crystal referred to as "bulk mesophase" as an intermediate product.

In the process of thermal decomposition and polycondensation reactions, various decomposed gases or light distillates are produced by the decomposition and polycondensation, and a hydrogen gas is generated by the polycondensation reaction. Simultaneously, in conjunction with the phenomena, the mesophase is formed, grown, and coalesced by polymerization by radical reaction by decomposition or polycondensation reaction by dealkylation and dehydrogenation, resulting in production of raw coke.

The present inventors have employed a delayed coking method as a method for treating raw oil at high temperatures and widely studied on influences of the quantity of the gas generated in the coking step according to the selection of raw oil, the raw oil blend, and the operating conditions of the coker, the gas composition, and the quantity of the coke produced on the chemical structure of the carbon material.

They have dedicated to the studies. As a result, raw oil and operating conditions have been selectively determined in the coking step, the ratio of the generation rate of the generated gas and the formation rate of the raw coke materials has been set to a predetermined value, and a raw coke materials (raw coke) which is a striped agglomerate having a structure in which the surface of each strip is curved into a bow shape has been produced. It is considered that the striped structure shows uniaxial orientation along the holes formed when the gas generated during the formation of mesophase and the polycondensation of bulk mesophase in the coking step is transferred from the bulk mesophase and the stacked layer surface is curved into a bow shape. The striped structure is shown. Accordingly, the crystal structure of raw coke may have uniaxial orientation for forming lithium-ion diffusion pathways regularly.

The present inventors have found out that a lithium ion secondary battery using a carbon material obtained by pulverizing and carbonizing such a raw coke materials or further graphitizing the composition after carbonization as a negative electrode material reproducibly exhibits high-speed charge and discharge characteristics.

It is already known that the carbon crystal is expanded and shrunk in carbonizing the raw coke materials or further graphitizing the composition after carbonization. Hence, the exhibition of high-speed charge and discharge characteristics is considered due to the fact that if the raw coke materials which has uniaxial orientation and is also a striped agglomerate having a structure in which the surface of each strip is curved into a bow shape is carbonized or graphitized, the distortion due to the stress of expansion and shrinkage becomes large at the curved bow portion, many fine gaps are generated as compared with the conventional raw coke materials having a flat structure, this allows lithium ions to diffuse easily.

According to the present invention, there is provided a production method of raw coke materials ,according to claim 1, of a carbon material for a negative electrode of a lithium ion secondary battery, wherein the composition is a striped agglomerate obtained by a delayed coking method under a condition that the ratio of the generation rate (mass%) of a generated gas, which includes a hydrogen gas generated by subjecting a heavy oil to coking and C1-C4 gases and the formation rate (mass%) of the raw coke materials, generation rate/formation rate, is from 0.3 to 0.8, and wherein, when an average length of the base of the stripes is defined as W, an average height is defined as H, and an average length in the vertical direction is defined as L, H/W is from 0.15 to 0.40 and L/W is 5.0 or more.

In a another aspect of the invention according to the present application, there is provided a production method of a carbon material for a negative electrode of a lithium ion secondary battery including: pulverizing the raw coke obtained according to the method of the invention so as to have an average particle size of 30 µm or less; and carbonizing the resulting powder or further graphitizing the resulting powder after carbonization.

### Advantageous Effects of Invention

When the carbon material obtained by carbonizing the raw coke materials of the present invention is used as a negative electrode material, it is possible to obtain a lithium ion secondary battery reproducibly exhibiting high-speed charge and discharge characteristics.

### Brief Description of the Drawings

Fig. 1 is a scanning electron microscope photograph observing the surface of raw coke materials obtained the present invention.
Fig. 2(a) is a scanning electron microscope photograph of an average length L in the vertical direction of stripes of the raw coke materials
Fig. 2(b) is a scanning electron microscope photograph showing an average length W of the base of the stripes of the raw coke materials and an average height H.
Fig. 2(c) is a pattern diagram showing a relationship among the average length W of the base of the stripes of the raw coke, the average height H, and an average length L in the vertical direction.
Fig. 3(a) is a scanning electron microscope photograph of the raw coke materials having a random structure.
Fig. 3(b) is a scanning electron microscope photograph of the raw coke materials having a random structure.
Fig. 4 is a cross-sectional view of a battery.

### Embodiments of the Invention

Hereinafter, the present invention will be described more in detail. The heavy oil as a starting material in the method of the present invention includes desulfurized and deasphalted petroleum oil, and fluid catalytic cracking bottom oil,

The desulfurized and deasphalted oil is produced by treating an oil such as vacuum residual oil with a solvent-deasphalting apparatus using propane, butane, pentane, or a mixture thereof a solvent, removing the asphalt content, and desulfurizing the deasphalted oil (DAO) thus obtained so as to have a sulfur content of 0.05 to 0.40 mass%.

The fluid catalyst cracking bottom oil is a bottom oil obtained from a fluid catalystic cracking (abbreviated as FCC) apparatus. The apparatus is a fluidized-bed fluid catalytic cracking apparatus which uses vacuum gas oil as raw oil and allows the oil to be selectively decomposed using a catalyst to produce high-octane FCC gasoline. Examples of the bottom oil from the residual fluid catalystic cracking (RFCC) apparatus include bottom oils produced by using a residual oil such as atmospheric residual oil, changing the reactor outlet temperature (ROT) within a range of 510 to 540°C, changing the mass ratio of catalyst/oil within a range of 6 to 8.

As the method for converting heavy oil to raw coke materials by the coking, the delayed coking method is used. Specifically, the delayed coking method is a method including heat-treating a heavy oil using a delayed coker under the pressurized conditions to obtain a raw coke materials. The conditions of the delayed coker are as specified in claim 1.

According to the present invention, the ratio of the generation rate (mass %) of a generated gas, which includes a hydrogen gas generated by subjecting a heavy oil to coking and C1-C4 gases and the formation rate (mass %) of the raw coke materials, generation rate/formation rate, is from 0.3 to 0.8.

The gases generated by the above coking include a hydrogen gas and C1-C4 gases. The C1-C4 gases are composed of a hydrocarbon compound having 1-4 carbon atoms. Examples thereof include paraffinic hydrocarbons such as methane (CH₄), ethane (C₂H₆), propane (C₃H₈), and butane (C₄H₁₀); and olefin hydrocarbons such as ethylene (C₂H₄), propylene (C₃H₆), and butylene (C₄H₈). For example, single gases such as a butane gas and a butylene gas or mixed gases fall into the C4 gas.

The composition of the gas generated by the coking and the generation rate can be calculated using an integrated gas flowmeter, an integrated liquid flowmeter, and a process gas chromatograph in the delayed coker. The formation rate of the raw coke materials can be calculated by determining process in the volume of the formed composition using a radiation level meter in the delayed coker chamber.

Among the generated gases, a hydrogen gas and C1-C2 gases are directly recovered in a gaseous state by a coker distillation column OH receiver. C3-C4 gases are cooled in a gas purification section of the coker and they are recovered in liquid form.

The generation rate (mass%) of the hydrogen gas and C1-C2 gases can be calculated by calculating the weight of the generated gas from the quantity (Nm³) of the gas generated for a predetermined time, the ratio of each component, and the molecular weight of each component and determining their ratios relative to the weight of raw oil kept for a predetermined time.
As for the generation rate (% by mass) of C3-C4 gases, they are cooled and recovered in liquid form, and thus it can be calculated by calculating the weight from the volume (KL) of each gas generated for a predetermined time and the density of each component and determining their ratios relative to the weight of raw oil kept for a predetermined time in the same manner as above.

Further, the formation rate (mass%) of the raw coke materials can be calculated by calculating the formation weight from the volume (m³) of the raw coke materials measured using the radiation level meter and the bulk density (ton/m³), and determining its ratio relative to the weight of raw oil kept for a predetermined time.

The above ratio (generation rate/formation rate) can be achieved by controlling characteristics of heavy oil as a raw material and the operating conditions of the delayer coker (temperature and pressure). As an example, a relationship between the ratio and the temperature setting during operation of the delayed coker or raw oil will be additionally described.

A ratio of less than 0.3 is caused when the reaction temperature in the delayed coker is set too low to generate a mild decomposition reaction and a polycondensation reaction. In this case, the quantity of the gas generated by the decomposition and polycondensation reactions is small. Further, the growth of the mesophase itself to be formed by the decomposition and polycondensation reactions progresses gradually. Accordingly, a bulk mesophase having a large domain of optical anisotropy is formed so that a regular crystal arrangement can be obtained.

However, the gas is gradually generated and the quantity is small, and the raw coke materials having a structure in which the surface of each stripe is curved into a bow shape is restricted. Thus, the number of gaps formed at a portion being curved into a bow shape during carbonization or graphitization is small. Consequently, high-speed charge and discharge characteristics remain at the same level of the case of using conventional natural graphite or the like.

A ratio of greater than 0.8 is caused when the reaction temperature in the delayed coker is set too high to generate a vigorous decomposition reaction and a polycondensation reaction. In this case, the quantity of the gas generated by the decomposition and polycondensation reactions increases extremely. The mesophase generation occurs suddenly and the mesophase is coalesced before sufficient growth of it.

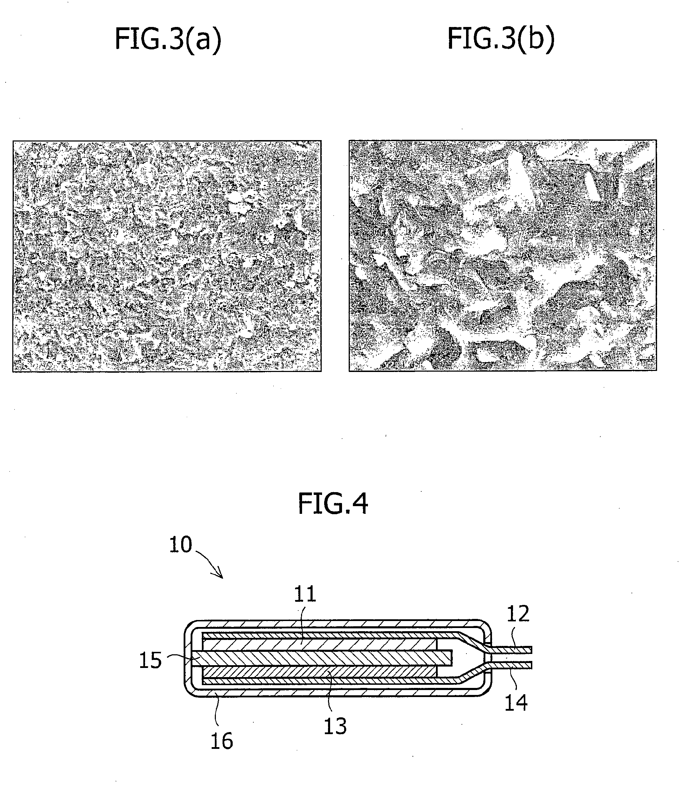

Further, the mesophase is coalesced in a vigorous turbulent flow due to the gas suddenly produced by decomposition generated simultaneously with the growth or coalescence. As a result, the raw coke materials do not exhibit a uniaxial orientation and has a random structure as shown in Figs. 3(a) and 3(b). Thus, it has neither a striped pattern nor a structure in which the surface of each stripe is curved into a bow shape. The raw coke materials having a random structure are poor in high-speed charge and discharge characteristics.

As described above, when the ratio of the generation rate and the formation rate are set to a predetermined ratio, it is possible to obtain raw coke materials which have a striped pattern and a structure in which the surface of each stripe is curved into a bow shape.

In order to set the generation rate/formation rate to a predetermined ratio, it is possible to appropriately select the type of raw oil that is the heavy oil, the raw oil blend, and the operating conditions of the delayed coker (pressure, temperature, and the like).

In order to appropriately obtain the raw coke materials, preferably, the quantity of the generated gas, the composition of the generated gas, the generated amount of the raw coke materials in time intervals between the start and end of the operation are collectively calculated, and the obtained values are reflected in the following operation.

The raw coke materials according to the present invention are striped agglomerate obtained by the delayed coking method under the above conditions. In each stripe of the raw coke materials having a structure in which the surface of each stripe is curved into a bow shape, an average length of the base is defined as W, an average height is defined as H, and an average length in the vertical direction is defined as L, H/W is from 0.15 to 0.40 and L/W is 5.0 or more.

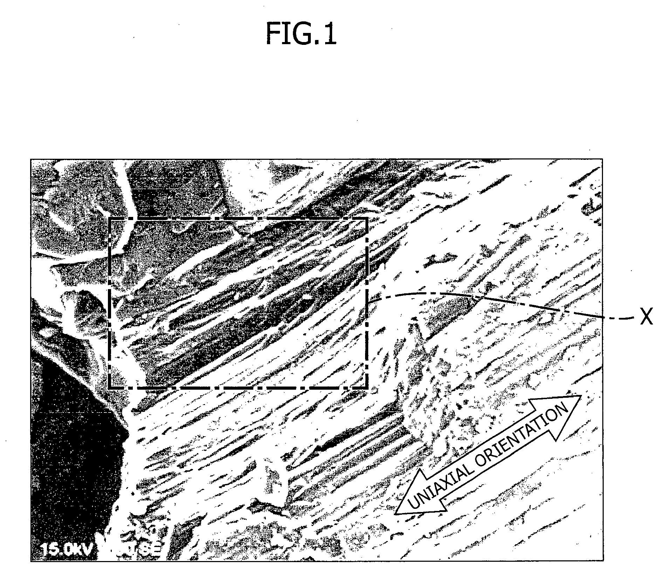

Fig. 1 is a scanning electron microscope photograph observing the surface of an agglomerate of the raw coke materials obtained according to the present invention. In observing the surface, it is impossible to directly observe the size of the agglomerate. Thus, it is cut into a measurement size and adjusted for use. The structure like a striped pattern is formed in such a manner that the mesophase is formed, grown, and coalesced in the coking step to form a bulk mesophase, and then the bulk mesophase is stacked along a loophole produced by the gas generated simultaneously with polycondensation of the bulk mesophase. The structure exhibits uniaxial orientation as indicated with an arrow.

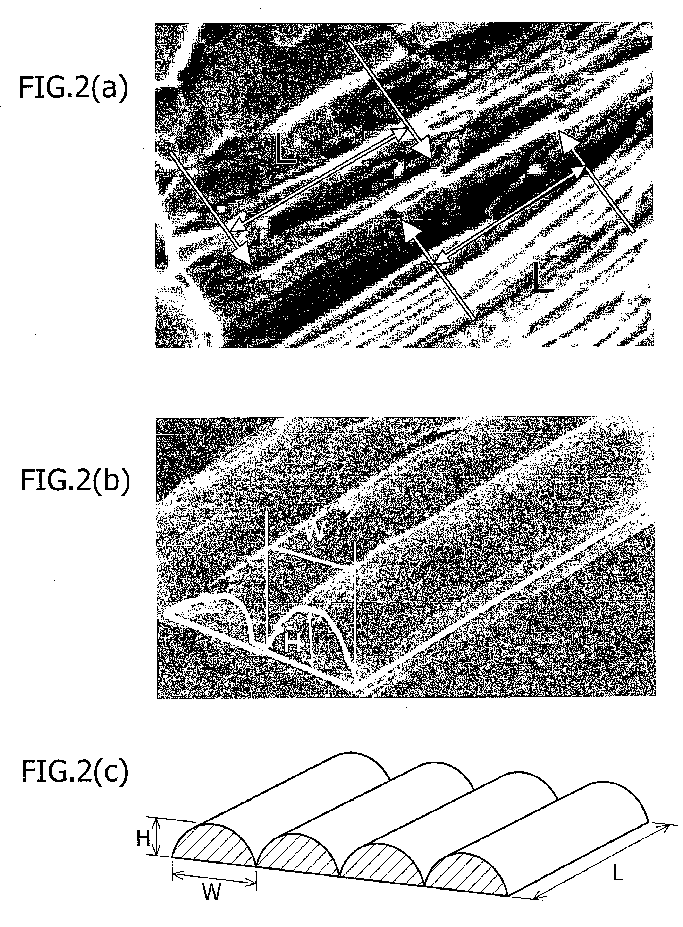

Fig. 2(a) is an SEM photograph in which a portion X of Fig. 1 is enlarged and is a scanning electron microscope photograph showing an average length L in the vertical direction of the stripes of the raw coke materials Fig. 2(b) is a scanning electron microscope photograph showing an average length W of the base of the stripes of the raw coke materials and an average height H. As is clear from these photographs, the raw coke materials are agglomerate having a structure including a plurality of stacked plates. This structure is curved into a bow shape. In other words, since the raw coke materials have a structure including a plurality of stacked plates, the structure is seen as a striped pattern shown in Fig. 1. The surface is curved into a bow shape.

As described above, many bulk mesophases are stacked and thus the raw coke materials exhibit a uniaxial direction.
Simultaneously, the stacked surface is curved into a bow shape. For this reason, it is considered that the surface forms a striped pattern. If this raw coke materials is carbonized and the like, this results in distortion due to the stress of expansion and shrinkage between the stacked layers during the carbonization and the like. Particularly, the distortion becomes large at the curved bow portion along loopholes of the generated gas. Accordingly, many fine gaps are generated and lithium ions are easily diffused. Thus, high-speed charge and discharge characteristics are given.

Fig. 2(c) is a pattern diagram showing a relationship among the base W, the height H, and the length L which are added to Figs. 2(a) and 2(b). The raw coke materials have a semicircular sectional shape. As shown in Figs. 2(a) to 2(c), the composition is characterized in that when the average bow base of the cross section is defined as W, an average bow height is defined as H, and an average length in the vertical direction is defined as L, H/W is from 0.15 to 0.40 and L/W is 5.0 or more. Hence, the raw coke materials are characterized in that when an average length of the base of the stripes is defined as W, an average height is defined as H, and an average length in the direction of the stripes is defined as L, H/W is from 0.15 to 0.40 and L/W is 5.0 or more.

In the raw coke materials as shown in Fig. 2(a) and 2(b), variations occur in the bottom width of the bow shape, the bow height, and the length in the stripe direction. However, if bases, heights, and lengths in the agglomerate are averaged and H/W and L/W are within the above ranges, the effects of the present invention are exerted.

H/W shows the distorted degree by the curve of the bow shape. When H/W is less than 0.15, the distortion due to the curve of the bow shape is small and the number of gaps decreases. This results in difficulty in diffusion of lithium ions. On the other hand, if H/W exceeds 0.4, the distortion due to the curve of the bow shape is too large. This results in easy breakage of the structure in the following carbonization and graphitization.

When a lithium ion secondary battery is produced using the raw coke materials, L/W has an influence on the capacity of battery. When L/W is less than 5.0, uniaxial orientation (crystallinity) is insufficient. Since a structure having lithium-ion diffusion pathways regularly formed is not included, the capacity is poor.

If H/W is from 0.15 to 0.40, many fine gaps are generated without breaking the structure. This allows lithium ions to diffuse easily. If L/W is 5.0 or more, a sufficient battery capacity can be ensured. As a result, high-speed charge and discharge characteristics are given to the lithium ion secondary battery by satisfying these conditions.

Here, the height of the bow shape is preferably 1 µm or more. When it is less than 1 µm, the capacity during high-speed charge and the performance of efficiency tend to be relatively poor. This is because the curve into the bow shape is small and thus the gaps at the curved bow portion become small during carbonization and graphitization, and the diffusion of the electrolyte solution when the lithium ion secondary battery is formed is poor.

The length of the base of each stripe (the bow base of the cross section) is preferably from 3 to 25 µm. If it is less than 3 µm, pulverization progresses extremely along the stripe direction in the following step of pulverizing the raw coke materials. This is not preferred. On the other hand, if the length of the base of each stripe exceeds 25 µm, the average particle size of the carbon material used for a lithium ion secondary battery is generally 30 µm or less. Thus, one having a bow curve is not obtained and high-speed charge and discharge performance tends to be poor.

When the raw coke materials obtained by the method of the present invention are pulverized so as to have an average particle size of 30 µm or less, and the resulting powder is carbonized or the resulting powder is graphitized after carbonization, it is possible to produce a carbon material for a negative electrode of a lithium ion secondary battery which has high-speed charge and discharge characteristics more excellent than those of a conventional one.

Here, the reason why the raw coke materials are pulverized so as to have an average particle size of 30 µm or less is because the average particle size of the carbon material used for the lithium ion secondary battery is usually 30 µm or less. In this regard, the average particle size can be measured using a measurement device based on a laser diffraction scattering method.

After the above carbonization, the graphitization may be appropriately performed.

The carbonization and graphitization conditions are not particularly limited. The raw coke materials are introduced into a rotary kiln, a shaft kiln or the like, and calcined at 1000 to 1500°C to obtain calcined (carbonized) coke. Then, if necessary, the above coke or calcined coke is graphitized in an Acheson furnace or the like at 2200 to 2800°C. As the carbon material for a negative electrode of a lithium ion secondary battery, such a carbonized product (calcined product) or a product obtained by graphitizing the carbonized product is used.

Next, a production method of a negative electrode for a lithium-ion secondary battery using the carbon material as well as a production method of a lithium-ion secondary battery will be described.

A production method of a negative electrode of a lithium ion secondary battery includes, but not limited to, pressure molding of a mixture containing the carbon material according to the present invention, a binder, and if necessary a conductive aid and organic solvent. Alternatively, a production method of a negative electrode may include slurrying of the carbon material, a binder, a conductive aid, and the like in an organic solvent to obtain slurry, applying the slurry onto a collector, and then drying the collector.

Examples of the binder include polyvinylidene fluoride, polytetrafluoroethylene, styrene-butadiene rubber (SBR), and the like. A content of the binder is suitably 1 to 30 parts by mass based on 100 parts by mass of the carbon material, and it is preferably from 3 to 20 parts by mass.

Examples of the conductive aid include carbon black, graphite, acetylene black, indium-tin oxide exhibiting conductivity, and conductive polymers such as polyaniline, polythiophene and polyphenylenevinylene. The using amount of the conductive aid is preferably from 1 to 15 parts by mass based on 100 parts by mass of the carbon material.

Examples of the organic solvent include dimethylformamide, N-methylpyrrolidone, isopropanol, toluene, and the like.

The method for mixing the carbon material and the binder and if necessary the conductive aid, and the organic solvent includes a method for using a well-known apparatus such as a screw-type kneader, ribbon mixer, universal mixer, or planetary mixer. The mixture thus obtained is then rolled or pressed to be molded. The pressure at this time is preferably from about 100 to 300 MPa.

The material and shape of the collector is not particularly limited. For example, a foil, a perforated foil, or a mesh formed as bands, which are formed from aluminum, copper, nickel, titanium, stainless steel, or the like, may be used. As the collector, a porous material such as a porous metal (metal foam) or carbon paper may also be used.

Examples of the method for coating the collector with the negative electrode slurry include, but not particularly limited to, well-known methods such as metal mask printing, electrostatic coating, dip coating, spray coating, roll coating, doctor blading, gravure coating, and screen printing. After coating, rolling treatment with a flat press, calender roll or the like is performed, if necessary.

Also, integration of the collector with the slurry obtained in the form of a sheet, pellets, or the like may be carried out by a well-known method using, for example, a roll or press, or a combination thereof.

A lithium secondary battery can be obtained, for example, by placing a negative electrode for a lithium ion secondary battery produced in the above manner and a positive electrode so as to face them to each other via a separator, and pouring an electrolyte solution between them.

Any active material may be used with no particular limitation for the positive electrode, and for example, a metal compound, metal oxide, metal sulfide or a conductive polymer material capable of doping or intercalating lithium ions may be used. Examples thereof include lithium cobaltate (LiCoO₂), lithium nickelate (LiNiO₂), lithium manganate (LiMn₂O₂), complex oxides thereof (LiCo_{X}Ni_{Y}Mn_{Z}O₂, X + Y + Z = 1), lithium manganese spinel (LiMn₂O₄), lithium vanadium compounds, V₂O₅, V₆O₁₃, VO₂, MnO₂, TiO₂, MoV₂O₈, TiS₂, V₂S₅, VS₂, MoS₂, MoS₃, Cr₃O₈, Cr₂O₅, olivine-type LiMPO₄ (M:Co, Ni, Mn, Fe), conductive polymers such as polyacetylene, polyaniline, polypyrrole, polythiophene, and polyacene, and porous carbon, and mixtures thereof.

Usable examples of the separator include nonwoven fabrics, cloths and microporous films composed mainly of a polyolefin such as polyethylene or polypropylene, and combinations thereof. It is not necessary to use a separator when the positive and negative electrodes of a lithium ion secondary battery are configured not to be in direct contact.

As the electrolyte solution and electrolyte used in the lithium secondary battery, a well-known organic electrolyte solution, an inorganic solid electrolyte, or a polymer solid electrolytes can be used. An organic electrolyte solution is preferred from the viewpoint of electrical conductivity.

Examples of the organic electrolyte solution include organic solvents, for example, ethers such as dibutyl ether, ethylene glycol monomethyl ether, ethylene glycol monoethyl ether, ethylene glycol monobutyl ether, diethylene glycol monomethyl ether, and ethylene glycol phenyl ether; amides such as N-methylformamide, N,N-dimethylformamide, N-ethylformamide, N,N-diethylformamide, N-methylacetamide, N,N-dimethylacetamide, N-ethylacetamide, and N,N-diethylacetamide; sulfur-containing compounds such as dimethyl sulfoxide and sulfolane; dialkylketones such as methyl ethyl ketone and methyl isobutyl ketone; cyclic ethers such as tetrahydrofuran and 2-methoxytetrahydrofuran; carbonates such as ethylene carbonate, butylene carbonate, diethyl carbonate, dimethyl carbonate, methylethyl carbonate, propylene carbonate, and vinylene carbonate; and γ-butyrolactone, N-methylpyrrolidone, acetonitrile, and nitromethane.

Among them, preferable examples include ethylene carbonate, butylene carbonate, diethyl carbonate, dimethyl carbonate, methylethyl carbonate, propylene carbonate, vinylene carbonate, γ-butyrolactone, diethoxy ethane, dimethyl sulfoxide, acetonitrile, and tetrahydrofuran. Particularly preferable examples include carbonate-based non-aqueous solvents such as ethylene carbonate and propylene carbonate. These solvents may be used alone or as a mixture of two or more thereof.

As a solute (electrolyte) of these solvents, lithium salts are used. Examples of lithium salts include LiClO₄, LiBF₄, LiPF₆, LiAlCl₄, LiSbF₆, LiSCN, LiCl, LiCF₃SO₃, LiCF₃CO₂, LiN(CF₃SO₂)₂, and the like.

Examples of the polymer solid electrolyte include polyethylene oxide derivatives and polymers containing these derivatives, polypropylene oxide derivatives and polymers containing these derivatives, phosphoric acid ester polymers, and polycarbonate derivatives and polymers containing these derivatives.

There is absolutely no limitation on the selection of members which are other than those described above but necessary for constituting the battery.

The structure of the lithium ion secondary battery using the carbon material produced from the raw coke materials obtained according to the present invention for the negative electrode material is not particularly limited. It is usually common practice to wind a positive electrode, a negative electrode and a separator in a flat spiral manner to form a wound polar plate group, or stack them in a flat plate form to form a stacked polar plate group; and then encase the polar plate group in an outer casing. Lithium ion secondary batteries are used, for example, as paper cells, button cells, coin cells, stacked cells, cylindrical cells, or the like.

### Examples

Hereinafter, the present invention will be more specifically described based on Examples and Comparative examples, however the present invention is not limited to thereto.

### 1. Production of raw coke materials

### (1) Example 1

A mixture of 30 mass% of desulfurized and deasphalted oil having a sulfur content of 0.05 to 0.40 mass% and 70 mass% of RFCC bottom oil was introduced into a delayed coker and subjected to coking at a temperature of 465°C and a pressure of 500 kpa in an inert gas atmosphere to obtain a raw coke materials.

The generation rate of a generated gas including a hydrogen gas generated by the coking and C1-C4 gases were calculated using an integrated gas flowmeter, an integrated liquid flowmeter, and a process gas chromatograph in the delayed coker. The formation rate of the raw coke materials was calculated by determining process in the volume of the formed composition using a radiation level meter in the delayed coker chamber. As for the generation rate of the generated gas and the formation rate of the raw coke materials, the generation rate (mass%) of a hydrogen gas and C1-C2 gases was calculated by calculating the weight of the generated gas from the quantity (Nm³) of the gas generated for a predetermined time, the ratio of each component, and the molecular weight of each component and determining their ratios relative to the weight of raw oil kept for a predetermined time. As for the generation rate (% by mass) of C3-C4 gases, they were cooled and recovered in liquid form, and thus it was calculated by calculating the weight from the volume (KL) of each gas generated for a predetermined time and the density of each component and determining their ratios relative to the weight of raw oil kept for a predetermined time in the same manner as above. Further, the formation rate (mass%) of the raw coke materials was calculated by calculating the formation weight from the volume (m³) of the raw coke materials measured using the radiation level meter and the bulk density (ton/m³), and determining its ratio relative to the weight of raw oil kept for a predetermined time.

Further, a scanning electron microscope photograph of the raw coke materials thus obtained was taken by SEM. In a striped agglomerate having a structure in which the surface of each strip was curved into a bow shape, the average length W of the base, the height H, and the average length L in the vertical direction in each stripe were measured. Then, H/W and L/W were calculated. Here, an SEM instrument (S-3400N, manufactured by Hitachi, Ltd.) was used. 3-nm resolution was obtained at an accelerating voltage 30 kV per hour and 10-nm resolution was obtained at an accelerating voltage of 3 kV.

The type of raw oil, operating conditions of the delayed coker, the ratio of the generation rate and the formation rate, H/W, and L/W are shown in Table 1.

### (2) Example 2

Raw coke materials were produced under the same conditions of Example 1 except that the temperature of coking was set to 470°C.

### (3) Example 3

Raw coke materials were produced under the same conditions of Example 2 except that the pressure of coking was set to 550 kpa.

### (4) Example 4

A raw coke materials was produced under the same conditions of Example 2 except that a mixture being subjected to coking was composed of 70 mass% of desulfurized and deasphalted oil and 30 mass% of RFCC bottom oil.

### (5) Example 5

Raw coke materials were produced under the same conditions of Example 4 except that the temperature of coking was set to 475°C.

### (6) Comparative example 1

Raw coke materials were produced under the same conditions of Example 1 except that the temperature of coking was set to 455°C.

### (7) Comparative example 2

Raw coke materials were produced under the same conditions of Example 1 except that the temperature of coking was set to 480°C.

### (8) Comparative example 3

Raw coke materials were produced under the same conditions of Example 4 except that the temperature of coking was set to 475°C and the pressure of coking was set to 600 kpa.

### (9) Comparative example 4

Raw coke materials were produced under the same conditions of Example 4 except that the temperature of coking was set to 465°C.

### (10) Comparative example 5

A raw coke materials was produced under the same conditions of Example 2 except that a mixture being subjected to coking was composed of 30 mass% of Middle Eastern vacuum residual oil and 70 mass% of RFCC bottom oil.

### (11) Comparative example 6

Raw coke materials were produced under the same conditions of Example 2 except that 100 mass% of RFCC bottom oil was used as raw material oil being subjected to coking.

### (12) Comparative example 7

A raw coke materials was produced under the same conditions of Example 2 except that 100 mass% of Middle Eastern vacuum residual oil was used as a raw material oil being subjected to coking.

### (13) Comparative example 8

A raw coke materials was produced under the same conditions of Comparative example 7 except that 100 mass% of Middle Eastern vacuum residual oil was used as a raw material oil being subjected to coking.

### (14) Comparative example 9

A raw coke materials was produced under the same conditions of Example 5 except that 100 mass% of desulfurized and deasphalted oil was used as a raw material oil being subjected to coking.

**[Table 1]**

| | Type of Heavy oil | Operating conditions | | | Shape of raw coke materials | | | |
|---|---|---|---|---|---|---|---|---|
| | | Temperature (°C) | Pressure (kpa) | Generation rate/formation rate | H(µm) | W (µm) | H/W | L/W |
| Example 1 | Desulfurized and deasphalted oil 30%+RFCC bottom oil 70% | 465 | 500 | 0.3 | 2.0 | 11.0 | 0.18 | 8.0 |
| Example 2 | Desulfurized and deasphalted oil 30%+RFCC bottom oil 70% | 470 | 500 | 0.6 | 3.0 | 17.0 | 0.18 | 6.0 |
| Example 3 | Desulfurized and deasphalted oil 30%+RFCC bottom oil 70% | 470 | 550 | 0.4 | 1.1 | 5.0 | 0.22 | 5.0 |
| Example 4 | Desulfurized and deasphalted oil 70%+RFCC bottom oil 30% | 470 | 500 | 0.6 | 2.0 | 7.0 | 0.29 | 10.0 |
| Example 5 | Desulfurized and deasphalted oil 70%+RFCC bottom oil 30% | 475 | 500 | 0.8 | 1.8 | 5.0 | 0.36 | 15.0 |
| Comparative example 1 | Desulfurized and deasphalted oil 30%+RFCC bottom oil 70% | 455 | 500 | 0.2 | 2.4 | 35.0 | 0.07 | 4.0 |
| Comparative example 2 | Desulfurized and deasphalted oil 30%+ RFCC bottom oil 70% | 480 | 500 | 0.9 | 1.2 | 2.0 | 0.60 | 3.0 |
| Comparative example 3 | Desulfurized and deasphalted oil 70%+ RFCC bottom oil 30% | 475 | 600 | 0.6 | 0.7 | 1.0 | 0.70 | 12.0 |
| Comparative example 4 | Desulfurized and deasphalted oil 70%+ RFCC bottom oil 30% | 465 | 500 | 0.4 | 3.5 | 35.0 | 0.10 | 7.0 |
| Comparative example 5 | Desulfurized and deasphalted oil 30%+ RFCC bottom oil 70% | 470 | 500 | 0.7 | 2.7 | 18.0 | 0.15 | 4.0 |
| Comparative example 6 | RFCC bottom oil 100% | 470 | 500 | 0.3 | 5.0 | 30.0 | 0.17 | 3.0 |
| Comparative example 7 | Middle Eastern vacuum residual oil 100% | 470 | 500 | 1.0 | 2.0 | 5.0 | 0.40 | 1.5 |
| Comparative example 8 | Middle Eastern vacuum residual oil 100% | 480 | 500 | 1.2 | - | - | - | - |
| Comparative example 9 | Desulfurized and deasphalted oil 100% | 475 | 500 | 0.9 | 0.5 | 1.0 | 0.50 | 3.0 |

### 2. Carbonization and graphitization of raw coke materials

Each of the raw coke materials was pulverized using a hammer mill, manufactured according to SUS304 (hammer diameter: 500 mm) so as to have an average particle size of 30 µm or less. The resulting powder was calcined in a rotary kiln at 1200°C for 1 hour to prepare calcined coke. Further, the calcined coke was poured in a crucible and the crucible was set in an electric oven. It was graphitized at a maximum temperature of 2200°C in a nitrogen gas stream of 80 L/min. At this time, the heating rate was 200°C/hour, the retention time of the maximum temperature was 10 minutes, and the cooling rate was 100°C/hour until 1000°C and then, it was allowed to cool to room temperature while keeping the nitrogen gas stream. The resulting product was graphitized to prepare a carbon material for a negative electrode of a lithium ion secondary battery.

The average particle size was measured using a measurement device based on a laser diffraction scattering method.

### 3. Charge and discharge evaluation of Negative electrode material

### (1) Production of lithium ion secondary battery

Fig. 5 is a cross-sectional view of a battery 10 produced. Fig. 5 shows a negative electrode 11, a negative electrode collector 12, a positive electrode 13, a positive electrode collector 14, a separator 15, and an aluminum-laminated exterior part 16.

The negative electrode 11 is a sheet electrode obtained by mixing the graphitized carbon material obtained in each of Examples 1 to 5 or Comparative examples 1 to 9 as a negative electrode material, polyvinylidene fluoride (KF#9310, manufactured by Kureha Corporation), and acetylene black (Denka Black, manufactured by Denki Kagaku Kogyo Kabushiki Kaisha) at a mass ratio of 80:10:10 (mass ratio), in N-methyl-2-pyrrolidinone to prepare a slurry, and coating one side of a 18-µm thick copper foil with the resulting paste, drying the foil on a hot plate for 10 minutes, rolling the foil with a roll press, and cutting the foil so that a coated portion had a size of 30 mm wide and 50 mm long. At this time, the amount of coating per unit area was set so as to be 6 mg/cm² based on a mass of the graphite material.

From a portion of this sheet electrode, the negative electrode mixture is scraped off in a direction perpendicular to the longitudinal direction of the sheet. The exposed copper foil is integrally connected to the negative electrode collector 12 (copper foil) at the coated portion and plays a role as a negative electrode leads plate.

The positive electrode 13 is a sheet electrode obtained by mixing lithium nickelate (LiNi_{0.8}Co_{0.15}Al_{0.05}O₂, manufactured by Toda Kogyo Corp) serving as a positive electrode material and having an average particle size of 6 µm, polyvinylidene fluoride (KF #1320, manufactured by Kureha Corporation) as a binder, and acetylene black (Denka Black, manufactured by Denki Kagaku Kogyo Kabushiki Kaisha) at a mass ratio of 89:6:5, adding N-methyl-2-pyrrolidinone and kneading the resulting mixture into a paste, coating one side of a 30-µm thick aluminum foil with the resulting paste, drying the foil on a hot plate for 10 minutes, rolling the foil with a roll press, cutting the foil so that a coated portion had a size of 30 mm wide and 50 mm long. At this time, the amount of coating per unit area was set so as to be 10 mg/cm² based on a mass of lithium nickel oxide.

From a portion of this sheet electrode, the positive electrode mixture is scraped off in a direction perpendicular to the longitudinal direction of the sheet. The exposed aluminum foil is integrally connected to a positive electrode collector 14 (aluminum foil) at the coated portion and plays a role as a positive electrode leads plate.

The battery 10 was produced by drying the positive electrode 13, the negative electrode 11, and the separator 15 made of a microporous polyethylene film and another part sufficiently and introducing them in a glove box filled with an argon gas having a dew point of -100°C. The positive electrode 13 and the negative electrode 11 were dried at 150°C for 12 hours or more under reduced pressure, while the separator 15 and other members were dried at 70°C for 12 hours or more under reduced pressure.

The positive electrode 13 and the negative electrode 11 thus dried were stacked so that the coated portion of the positive electrode 13 faced to the coated portion of the negative electrode 11 with a microporous film (#2400, manufactured by CELGARD) made of polypropylene therebetween and they were fixed with a polyimide tape. It is to be noted that the positive electrode 13 and the negative electrode 11 were stacked and faced to each other so that the peripheral portion of the positive electrode coated portion to be projected to the coated portion of the negative electrode 11 is encompassed with the inner side of the peripheral portion of the negative electrode coated portion. A monolayer electrode body thus obtained was sealed in an aluminum laminate film and an electrolyte solution was poured. While the positive- and negative-electrode lead plates protrude outside, the laminate film was hot melted to obtain a hermetically closed type monolayer laminate-film battery 10. The electrolyte solution used was obtained by dissolving lithium hexafluorophosphate (LiPF₆) in a 3:7 (mass ratio) solvent mixture of ethylene carbonate and methyl ethyl carbonate to give to give 1 M volume molar concentration.

### (2) Charge and discharge evaluation of negative electrode material

### (a) Production of negative electrode

Fine particles of the carbon material for a negative electrode of a lithium ion secondary battery as an active material, acetylene black (AB) as a conductive material, polyvinylidene fluoride (PVDF) as a binder were added at a mass ratio of 80:10:10 to N-methyl-2-pyrrolidone to prepare a slurry. This slurry was applied onto a copper foil, the foil was dried on a hotplate for 10 minutes, followed by press molding with a roll press.

### (b) Production of battery for evaluation

A battery was produced by using the above composition as a negative electrode (30 x 50 mm), lithium nickel oxide (30 x 50 mm) as a positive electrode, a mixed liquid of ethylene carbonate (EC)/methyl ethyl carbonate (MEC) as an electrolyte solution (mass ratio of EC/MEC: 3/7) solute: LiPF₆ (1M volume molar concentration), and a microporous polyethylene film as a separator.

### (c) Evaluation of high-speed charge and discharge rate characteristics

The measurement results of high-speed charge and discharge characteristics of the produced batteries were shown in Table 2. The C rate in this evaluation was set to 10 C. The utilization % was determined by dividing the charge and discharge capacity at 10 C by the charge and discharge capacity at 1 C.

**[Table 2]**

| | Battery performance | | | |
|---|---|---|---|---|
| | Charge capacity (mAh) | Utilization (%) | Discharge capacity (mAh) | Utilization (%) |
| Example 1 | 15.5 | 83.3 | 15.2 | 82.9 |
| Example 2 | 14.9 | 81.9 | 15.1 | 81.1 |
| Example 3 | 14.8 | 80.2 | 14.7 | 80.1 |
| Example 4 | 15.2 | 80.7 | 15.4 | 80.3 |
| Example 5 | 15.5 | 82.9 | 15.9 | 83.2 |
| Comparative example 1 | 8.4 | 55.7 | 8.9 | 61.6 |
| Comparative example 2 | 10.7 | 67.4 | 10.8 | 69.9 |
| Comparative example 3 | 8.4 | 55.7 | 8.9 | 61.6 |
| Comparative example 4 | 12.1 | 67.3 | 12.4 | 69.7 |
| Comparative example 5 | 11.1 | 65.5 | 11.4 | 65.7 |
| Comparative example 6 | 12.3 | 66.7 | 11.1 | 70.5 |
| Comparative example 7 | 9.4 | 56.2 | 9.1 | 60.8 |
| Comparative example 8 | 10.5 | 65.6 | 8.5 | 60.8 |
| Comparative example 9 | 11.7 | 73.2 | 11.9 | 63.1 |

The raw coke materials in each of the examples and comparative examples except Comparative example 8 were striped agglomerate, and the surface of each strip was curved into a bow shape. The raw coke materials of Comparative example 8 had a random structure as shown in Fig. 3(a) and 3(b), striped agglomerate, and did not have a structure including the striped pattern surface curved into a bow shape. Thus, in Comparative example 8, the shape of the raw coke materials could not be measured (Table 1).

As shown in Examples 1 to 5, each lithium ion secondary battery using each raw coke materials obtained by the delayed coking method under the condition: generation rate/formation rate is from 0.3 to 0.8, where H/W is from 0.15 to 0.40 and L/W is 5.0 or more is excellent in charge capacity and discharge capacity, and has high utilization (80% or more) (Table 2).

On the other hand, as shown in Comparative examples 1 to 9, in the case of each lithium ion secondary battery using each raw coke materials which does not satisfy any one of the conditions: the generation rate/formation rate is from 0.3 to 0.8; H/W is from 0.15 to 0.40, and L/W is 5.0 or more, the charge capacity and the discharge capacity are low, and the utilization is also low (Table 2).

In Comparative examples 5, 7, and 8 among the comparative examples, Middle Eastern vacuum residual oil is used. Among the vacuum residual oils, the Middle Eastern vacuum residual oil has, particularly high sulfur content. The sulfur content inhibits the crystallization during the carbonization process. Accordingly, it is considered that a raw coke materials having excellent crystallinity is not produced. Such crystallinity is one of the factors that the battery performance is poor. In Comparative examples 5, 7, and 8, the raw coke materials like Examples 1 to 5 cannot be produced due to the use of the Middle Eastern vacuum residual oil, and the battery performance is poor as compared with that of the Examples.

From the above results, it is clear that a lithium ion secondary batter using the carbon material produced from the raw coke materials according to the present invention as a negative electrode is excellent in high-speed charge and discharge characteristics.

### Industrial Applicability

A lithium ion secondary battery using the carbon material produced from the raw coke materials according to the present invention has excellent high-speed charge and discharge characteristics. Therefore, it can be used industrially in automobiles, particularly hybrid vehicles or plug-in hybrid vehicles.

### Reference Signs List

- 10: battery
- 11: negative electrode
- 12: negative electrode collector
- 13: positive electrode
- 14: positive electrode collector
- 15: separator
- 16: aluminum-laminated exterior part

## Claims

1. A production method of raw coke materials for use in production of a carbon material for a negative electrode of a lithium ion secondary battery, comprising the step of:
subjecting a heavy oil to coking in a delayed coking method, in which the ratio of the generation rate in mass% of a generated gas, which comprises C1-C4 gases and a hydrogen gas generated, to the formation rate in mass% of the raw coke materials, i.e. generation rate/formation rate, is from 0.3 to 0.8, **characterized in that** the delayed coking method comprises the step of:
coking the heavy oil which is a mixture of desulfurized and deasphalted oil having a sulfur content of 0.05 to 0.40 mass% and RFCC bottom oil in a delayed coker under an inert gas atmosphere to obtain the raw coke materials which are a striped agglomerate having a semicircular sectional shape and having H/W of from 0.15 to 0.40 and L/W of 5.0 or more, wherein an average bow base of the cross section of the stripe is defined as W, an average bow height is defined as H, and an average length in the vertical direction is defined as L; and
wherein the heavy oil is a first mixture consisting of 30 mass% of the desulfurized and deasphalted oil and 70 mass% of the RFCC bottom oil, or a second mixture consists of 70 mass% of the desulfurized and deasphalted oil and 30 mass% of the RFCC bottom oil, and
when the heavy oil is the first mixture, a coking temperature is 465°C to 470°C, and a coking pressure is 500 kPa to 550 kPa, and
when the heavy oil is the second mixture, a coking temperature is 470°C to 475°C, and a coking pressure is 500 kPa.

2. A production method of a carbon material for use in production of a negative electrode of a lithium ion secondary battery comprising:
the method of claim 1 to obtain the raw coke materials;
pulverizing the raw coke materials so as to have an average particle size of 30 µm or less; and
carbonizing the resulting powder.

3. The production method of a carbon material for use in production of a negative electrode of a lithium ion secondary battery according to claim 3, further comprising the step of graphitization after carbonizing.

## Patentansprüche

1. Herstellungsverfahren von Rohkoksmaterialien zur Verwendung in der Herstellung von einem Kohlenstoffmaterial für eine negative Elektrode einer Lithiumionensekundärbatterie, umfassend den Schritt:
Aussetzen eines Schweröls einer Verkokung in einem Verzögerungsverkokungsverfahren, in welchem das Verhältnis der Erzeugungsgeschwindigkeit in Massen% eines erzeugten Gases, welches C1-C4 Gase und ein erzeugtes Wasserstoffgas umfasst, zu der Bildungsgeschwindigkeit in Massen% der Rohkoksmaterialien, d.h. Erzeugungsgeschwindigkeit/Bildungsgeschwindigkeit, von 0,3 bis 0,8 beträgt, **dadurch gekennzeichnet, dass** das Verzögerungsverkokungsverfahren den Schritt umfasst:
Verkoken des Schweröls, welches eine Mischung von entschwefeltem und deasphaltiertem Öl, welches einen Schwefelanteil von 0,05 bis 0,40 Massen% aufweist, und RFCC Bodenöl in einem Verzögerungskoker unter einer Inertgasatmosphäre zum Erhalten der Rohkoksmaterialien, welche ein gestreiftes Agglomerat, aufweisend einen halbkreisförmigen Querschnitt und aufweisend H/W von 0,15 bis 0,40 und L/W von 5,0 oder mehr, ist, wobei eine durchschnittliche Bogenbasis der Querschnitts des Streifens als W definiert ist, eine durchschnittliche Bogenhöhe als H definiert ist und eine durchschnittliche Länge in der vertikalen Richtung als L definiert ist; und
wobei das Schweröl eine erste Mischung ist, bestehend aus 30 Massen% des entschwefelten und deasphaltierten Öls und 70 Massen% des RFCC Bodenöls, oder eine zweite Mischung aus 70 Massen% des entschwefelten und deasphaltierten Öls und 30 Massen% des RFCC Bodenöls besteht, und
wenn das Schweröl die erste Mischung ist, eine Verkokungstemperatur 465°C bis 470°C beträgt und ein Verkokungsdruck 500 kPa bis 550 kPa beträgt, und
wenn das Schweröl die zweite Mischung ist, eine Verkokungstemperatur 470°C bis 475°C beträgt und ein Verkokungsdruck 500 kPa beträgt.

2. Herstellungsverfahren eines Kohlenstoffmaterials zur Verwendung in der Herstellung einer negative Elektrode einer Lithiumionensekundärbatterie, umfassend:
das Verfahren nach Anspruch 1 zum Erhalten der Rohkoksmaterialien;
Pulverisieren der Rohkoksmaterialien, so dass diese eine durchschnittliche Teilchengröße von 30 µm oder weniger aufweisen; und
Verkohlen des entstandenen Pulvers.

3. Herstellungsverfahren eines Kohlenstoffmaterials zur Verwendung in der Herstellung einer negative Elektrode einer Lithiumionensekundärbatterie nach Anspruch 2, weiter umfassend den Schritt der Graphitisierung nach Verkohlung.

## Revendications

1. Un procédé de production de matières en coke brut à utiliser dans la production d'une matière carbonée pour une électrode négative d'une batterie secondaire aux ions de lithium, comprenant l'étape de:
soumettre une huile lourde à une cokéfaction dans un procédé de cokéfaction différée, dans lequel le rapport du taux de génération en % en masse d'un gaz généré, qui comprend des gaz en C₁-C₄ et d'un gaz hydrogène généré, au taux de formation en % en masse des matières en coke brut, c'est-à-dire le taux de génération/taux de formation, va de 0.3 à 0.8,
**caractérisé en ce que** le procédé de cokéfaction différée comprend l'étape de:
cokéfaction de l'huile lourde, laquelle est un mélange d'huile désulfurisée et désasphaltée présentant une teneur en soufre de 0.05 à 0.40% en masse et d'huile de fond de RFCC dans une unité de cokéfaction différée sous atmosphère de gaz inerte pour obtenir les matières en coke brut, qui sont un agglomérat strié présentant une forme en coupe semi-circulaire et présentant un H/W allant de 0.15 à 0.40 et un L/W de 5.0 ou plus, où une base moyenne d'arc de la coupe de la strie est définie en W, une hauteur moyenne d'arc est définie en H et une longueur moyenne dans la direction verticale est définie en L; et
dans lequel l'huile lourde est un premier mélange consistant de 30% en masse d'huile désulfurée et désasphaltée et 70% en masse d'huile de fond de RFCC, ou un deuxième mélange consistant de 70% en masse d'huile désulfurée et désasphaltés et de 30% en masse d'huile de fond de RFCC, et
quand l'huile lourde est le premier mélange, une température de cokéfaction va de 465°C à 470°C, et une pression de cokéfaction va de 500 kPa à 550 kPa, et
quand l'huile lourde est le deuxième mélange, une température de cokéfaction va de 470°C à 475°C, et une pression de cokéfaction est de 500 kPa.

2. Un procédé de production d'une matière carbonée à utiliser dans la production d'une électrode négative d'une batterie secondaire aux ions de lithium, comprenant:
le procédé selon la revendication 1 pour obtenir les matières en coke brut;
la pulvérisation des matières en coke brut de manière à obtenir une dimension particulaire moyenne de 30 µm ou moins; et
la carbonisation de la poudre obtenue.

3. Le procédé de production d'une matière carbonée à utiliser dans la production d'une électrode négative d'une batterie secondaire aux ions de lithium selon la revendication 3, comprenant en outre l'étape de graphitisation après carbonisation.
